# EUROPEAN PATENT APPLICATION

(11) **EP 4 207 235 A1**
(43) Date of publication of application: **05.07.2023**
(21) Application number: 22216924.5
(22) Date of filing: 28.12.2022
(51) Int. Cl.: H01H 47/22, H01H 47/36, H01H 47/02, H01H 47/04, H01H 33/666, H01F 7/06, H01F 7/18, H01F 7/16

(54) **CONTROL CIRCUIT USED FOR CIRCUIT BREAKER, AND ELECTRONIC DEVICE**

(30) Priority: 31.12.2021 CN 202111676064
(71) Applicant: Huawei Digital Power Technologies Co., Ltd., Shenzhen, 518043 (CN)
(72) Inventor: WU, Jian, Shenzhen, 518043 (CN); WANG, Shuai, Shenzhen, 518043 (CN); BISSAL, Ara, Shenzhen, 518043 (CN); XU, Zhen, Shenzhen, 518043 (CN)
(74) Representative: Thun, Clemens

(57) **Abstract**

This application provides a control circuit used for a circuit breaker, and an electronic device. The control circuit includes a first coil, a second coil, a switch module, and an adjustable current supply module. A first end of the switch module is coupled to one end of the first coil, the other end of the first coil is coupled to one end of the adjustable current supply module, the other end of the adjustable current supply module is coupled to a second end of the switch module, a third end of the switch module is coupled to one end of the second coil, and the other end of the second coil is coupled to a fourth end of the switch module. The switch module can control a direction of a first current. The adjustable current supply module can change a magnitude of the first current. The first current is used to excite the first coil to generate a first magnetic field and excite the second coil to generate a second magnetic field, and the first magnetic field interacts with the second magnetic field, to control closing or opening of the circuit breaker. According to this application, the circuit breaker can be controlled to be quickly open, and a service life of the circuit breaker can be further improved.

## Description

### TECHNICAL FIELD

This application relates to the field of power supply technologies, and in particular, to a control circuit used for a circuit breaker, and an electronic device.

### BACKGROUND

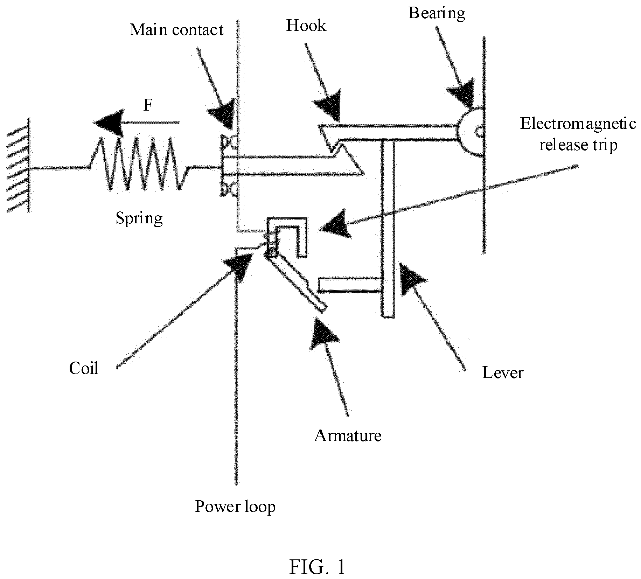

In a power supply system, a circuit breaker is required to implement functions such as power distribution and protection. Currently, the power supply system uses a circuit breaker shown in FIG. 1. When a current in a power loop instantaneously changes, a coil connected in series in the power loop generates a magnetic field, to pull in an armature. In a process of pulling in the armature, the armature hits a lever to disengage a hook. In this case, a spring recovers to an original state from a stretched state, and pulls a main contact to implement an opening function. The circuit breaker has many linkage apparatuses, such as the spring, the hook, the lever, and the armature, in an opening process. Therefore, linkage time is relatively long, and an opening speed is relatively slow.

### SUMMARY

This application provides a control circuit used for a circuit breaker, and an electronic device, to control the circuit breaker to be quickly open, and further improve a service life of the circuit breaker.

According to a first aspect, an embodiment of this application provides a control circuit used for a circuit breaker. The control circuit includes a first coil, a second coil, a switch module, and an adjustable current supply module, and the switch module includes a first end, a second end, a third end, and a fourth end. In a specific implementation, the first end of the switch module is coupled to one end of the first coil, the other end of the first coil is coupled to one end of the adjustable current supply module, the other end of the adjustable current supply module is coupled to the second end of the switch module, the third end of the switch module is coupled to one end of the second coil, and the other end of the second coil is coupled to the fourth end of the switch module. A first current flows through both the first coil and the second coil, the first coil generates a first magnetic field under excitation of the first current, and the second coil generates a second magnetic field under excitation of the first current. The switch module can control a direction of the first current, to control a direction of the first magnetic field and a direction of the second magnetic field. The adjustable current supply module can change a magnitude of the first current, to control strength of the first magnetic field and strength of the second magnetic field. It may be understood that the first magnetic field interacts with the second magnetic field, to control closing or opening of the circuit breaker. The direction of the first magnetic field and the direction of the second magnetic field may be specifically used to control whether the circuit breaker is closed or open, and the strength of the first magnetic field and the strength of the second magnetic field may be specifically used to control a closing speed or an opening speed of the circuit breaker.

The control circuit in this embodiment of this application can control the circuit breaker to implement quick opening or quick closing at a microsecond µs level. In addition, the adjustable current supply module is added to the control circuit, and the adjustable current supply module can control the magnitude of the first current, to control the closing speed or the opening speed of the circuit breaker. That is, the control circuit in this embodiment of this application is used, so that the closing speed or the opening speed of the circuit breaker is controllable. Therefore, when the opening speed or the closing speed of the circuit breaker needs to be increased, the control circuit can increase the first current. However, when the opening speed or the closing speed of the circuit breaker needs to be reduced, the control circuit can reduce the first current. Therefore, the circuit breaker is prevented from being always quickly open or quickly closed to cause unnecessary wear between a movable contact and a static contact, thereby improving a service life of the circuit breaker.

With reference to the first aspect, in a first possible implementation, when the magnitude of the first current changes, both the strength of the first magnetic field and the strength of the second magnetic field accordingly change, and correspondingly, strength of a third magnetic field generated after the first magnetic field interacts with the second magnetic field also changes. The third magnetic field separately acts on the first coil and the second coil, an interactive force between the first coil and the second coil also changes, and the change of the interactive force affects the closing or opening speed of the circuit breaker.

With reference to the first possible implementation of the first aspect, in a second possible implementation, when the first current increases, both the strength of the first magnetic field and the strength of the second magnetic field increase, the strength of the third magnetic field generated after the first magnetic field interacts with the second magnetic field also increases, and the interactive force between the first coil and the second coil also increases, so that the closing or opening speed that is of the circuit breaker and that is affected by the interactive force increases.

With reference to the first possible implementation of the first aspect, in a third possible implementation, when the first current decreases, both the strength of the first magnetic field and the strength of the second magnetic field decrease, the strength of the third magnetic field generated after the first magnetic field interacts with the second magnetic field also decreases, and the interactive force between the first coil and the second coil also decreases, so that the closing or opening speed that is of the circuit breaker and that is affected by the interactive force decreases.

With reference to any one of the first aspect, or the possible implementations of the first aspect, in a fourth possible implementation, the adjustable current supply module includes a first discharge capacitor, a second discharge capacitor, and a first switch, and the second discharge capacitor is coupled to the first switch in series. In a specific implementation, one end obtained after the second discharge capacitor is coupled to the first switch in series is coupled to one end of the first discharge capacitor and the other end of the first coil, and the other end obtained after the second discharge capacitor is coupled to the first switch in series is coupled to the other end of the first discharge capacitor and the second end of the switch module. When the first switch is closed, the first current is a sum of discharge currents of the first discharge capacitor and the second discharge capacitor; or when the first switch is open, the first current is a discharge current of the first discharge capacitor.

With reference to the fourth possible implementation of the first aspect, in a fifth possible implementation, the switch module includes a second switch, a third switch, a fourth switch, and a fifth switch. In a specific implementation, one end of the second switch and one end of the third switch form the first end of the switch module, the other end of the second switch and one end of the fifth switch form the fourth end of the switch module, the other end of the third switch and one end of the fourth switch form the third end of the switch module, and the other end of the fourth switch and the other end of the fifth switch form the second end of the switch module.

The first switch and a target switch group in the switch module are simultaneously closed; or a target switch group in the switch module is closed at first time, the first switch is closed at second time, and the first time is earlier than the second time. Switches in the switch module other than the target switch group are in an open state, and the target switch group includes the second switch and the fourth switch, or the third switch and the fifth switch.

With reference to the fourth possible implementation of the first aspect or the fifth possible implementation of the first aspect, in a sixth possible implementation, the adjustable current supply module further includes a first diode, and the first diode is connected to the two ends of the first discharge capacitor in parallel. The first diode can increase a discharge speed of the first discharge capacitor.

With reference to the fourth possible implementation of the first aspect to the sixth possible implementation of the first aspect, in a seventh possible implementation, the first switch is closed when the circuit breaker is open.

With reference to the fourth possible implementation of the first aspect to the sixth possible implementation of the first aspect, in an eighth possible implementation, the first switch is closed when a system in which the circuit breaker is located is faulty.

According to a second aspect, an embodiment of this application provides a control circuit used for a circuit breaker. The control circuit includes a first coil, a second coil, a switch module, and an adjustable current supply module, the switch module includes a first end, a second end, a third end, and a fourth end, and the adjustable current supply module includes a first end, a second end, and a third end. In a specific implementation, the first end of the switch module is coupled to one end of the first coil, the other end of the first coil is coupled to the first end of the adjustable current supply module, the second end of the adjustable current supply module is coupled to the second end of the switch module, the third end of the switch module is coupled to one end of the second coil and the third end of the adjustable current supply module, and the other end of the second coil is coupled to the fourth end of the switch module. A first current flows through both the first coil and the second coil, the first coil generates a first magnetic field under excitation of the first current, and the second coil generates a second magnetic field under excitation of the first current. The switch module can control a direction of the first current, to control a direction of the first magnetic field and a direction of the second magnetic field. The adjustable current supply module can change a magnitude of the first current, to control strength of the first magnetic field and strength of the second magnetic field. It may be understood that the first magnetic field and the second magnetic field may be used to control closing or opening of the circuit breaker, the direction of the first magnetic field and the direction of the second magnetic field may be specifically used to control whether the circuit breaker is closed or open, and the strength of the first magnetic field and the strength of the second magnetic field may be specifically used to control a closing speed or an opening speed of the circuit breaker. In this embodiment of this application, costs of the control circuit can be reduced by changing a connection relationship of the adjustable current supply module.

With reference to the second aspect, in a first possible implementation, when the magnitude of the first current changes, both the strength of the first magnetic field and the strength of the second magnetic field accordingly change, and correspondingly, strength of a third magnetic field generated after the first magnetic field interacts with the second magnetic field also changes. The third magnetic field separately acts on the first coil and the second coil, an interactive force between the first coil and the second coil also changes, and the change of the interactive force affects the closing or opening speed of the circuit breaker.

With reference to the first possible implementation of the second aspect, in a second possible implementation, when the first current increases, both the strength of the first magnetic field and the strength of the second magnetic field increase, the strength of the third magnetic field generated after the first magnetic field interacts with the second magnetic field also increases, and the interactive force between the first coil and the second coil also increases, so that the closing or opening speed that is of the circuit breaker and that is affected by the interactive force increases.

With reference to the first possible implementation of the second aspect, in a third possible implementation, when the first current decreases, both the strength of the first magnetic field and the strength of the second magnetic field decrease, the strength of the third magnetic field generated after the first magnetic field interacts with the second magnetic field also decreases, and the interactive force between the first coil and the second coil also decreases, so that the closing or opening speed that is of the circuit breaker and that is affected by the interactive force decreases.

With reference to any one of the second aspect, or the possible implementations of the second aspect, in a fourth possible implementation, the adjustable current supply module includes a first discharge capacitor, a second discharge capacitor, and a first switch, and the second discharge capacitor is coupled to the first switch in series. In a specific implementation, one end obtained after the second discharge capacitor is coupled to the first switch in series is coupled to one end of the first discharge capacitor and the other end of the first coil, the other end of the first discharge capacitor is coupled to the second end of the switch module, and the other end obtained after the second discharge capacitor is coupled to the first switch in series is coupled to the third end of the switch module and one end of the second coil. When the first switch is closed, the first current is a sum of discharge currents of the first discharge capacitor and the second discharge capacitor; or when the first switch is open, the first current is a discharge current of the first discharge capacitor.

With reference to the fourth possible implementation of the second aspect, in a fifth possible implementation, the switch module includes a second switch, a third switch, a fourth switch, and a fifth switch. In a specific implementation, one end of the second switch and one end of the third switch form the first end of the switch module, the other end of the second switch and one end of the fifth switch form the fourth end of the switch module, the other end of the third switch and one end of the fourth switch form the third end of the switch module, and the other end of the fourth switch and the other end of the fifth switch form the second end of the switch module.

The first switch, the second switch, and the fourth switch are simultaneously closed; or the second switch and the fourth switch are closed at first time, the first switch is closed at second time, and the first time is earlier than the second time. The third switch and the fifth switch are in an open state.

With reference to the fourth possible implementation of the second aspect or the fifth possible implementation of the second aspect, in a sixth possible implementation, the adjustable current supply module further includes a first diode, and the first diode is connected to the two ends of the first discharge capacitor in parallel. The first diode can increase a discharge speed of the first discharge capacitor.

With reference to the sixth possible implementation of the second aspect, in a seventh possible implementation, the adjustable current supply module further includes a second diode, and the second diode is connected to the two ends of the second discharge capacitor in parallel. The second diode can increase a discharge speed of the second discharge capacitor.

With reference to the fifth possible implementation of the second aspect to the seventh possible implementation of the second aspect, in an eighth possible implementation, the adjustable current supply module further includes a sixth switch, one end of the sixth switch is coupled to the other end of the second switch and one end of the fifth switch, and the other end of the sixth switch is coupled to a series coupling point of the second discharge capacitor and the first switch. The third switch, the fifth switch, and the sixth switch are simultaneously closed; or the third switch and the fifth switch are closed at third time, the sixth switch is closed at fourth time, and the third time is earlier than the fourth time. The first switch, the second switch, and the fourth switch are in an open state.

With reference to the fourth possible implementation of the second aspect to the eighth possible implementation of the second aspect, in a ninth possible implementation, the first switch is closed when the circuit breaker is open.

With reference to the fourth possible implementation of the second aspect to the eighth possible implementation of the second aspect, in a tenth possible implementation, the first switch is closed when a system in which the circuit breaker is located is faulty.

According to a third aspect, an embodiment of this application provides an electronic device. The electronic device includes a circuit breaker and the control circuit used for the circuit breaker according to any one of the first aspect or the possible implementations of the first aspect.

According to a fourth aspect, an embodiment of this application provides an electronic device. The electronic device includes a circuit breaker and the control circuit used for the circuit breaker according to any one of the second aspect or the possible implementations of the second aspect.

It should be understood that mutual reference can be made to implementations and beneficial effects of the foregoing plurality of aspects in this application.

### BRIEF DESCRIPTION OF DRAWINGS

FIG. 1 is a schematic diagram of a structure of a circuit breaker in the conventional technology;
FIG. 2 is a block diagram of a structure of an electronic device according to an embodiment of this application;
FIG. 3 is a block diagram of a structure of a control circuit used for a circuit breaker according to an embodiment of this application;
FIG. 4 is a circuit diagram of an adjustable current supply module according to an embodiment of this application;
FIG. 5 is a circuit diagram of a control circuit used for a circuit breaker according to an embodiment of this application;
FIG. 6A and FIG. 6B are schematic diagrams of current directions of a first coil and a second coil according to an embodiment of this application;
FIG. 7 is a schematic diagram of a first current according to an embodiment of this application;
FIG. 8 is another schematic diagram of a first current according to an embodiment of this application;
FIG. 9 is a block diagram of another structure of a control circuit used for a circuit breaker according to an embodiment of this application;
FIG. 10 is another circuit diagram of an adjustable current supply module according to an embodiment of this application; and
FIG. 11 is another circuit diagram of a control circuit used for a circuit breaker according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The following further describes implementations of the technical solutions of this application in detail with reference to the accompanying drawings.

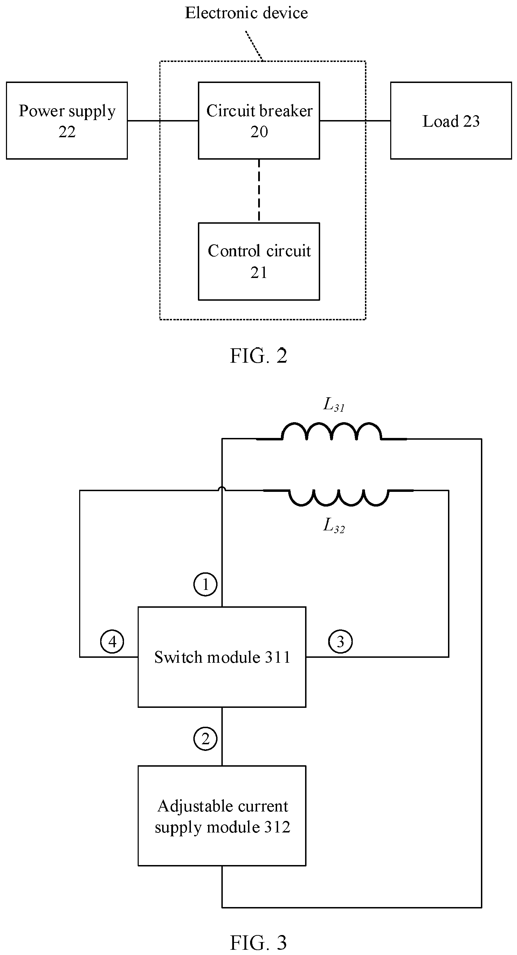

FIG. 2 is a block diagram of a structure of an electronic device according to an embodiment of this application. As shown in FIG. 2, the electronic device includes a circuit breaker 20 and a control circuit 21. The circuit breaker 20 includes a static contact and a movable contact. The static contact of the circuit breaker is coupled between a power supply 22 and a load 23, and there is a linkage connection relationship between the movable contact of the circuit breaker 20 and the control circuit 21. The control circuit 21 may control the movable contact and the static contact of the circuit breaker 20 to be in contact with each other or separated from each other, to control the circuit breaker 20 to be connected to the power supply 22 and the load 23, or disconnected from the power supply 22 and the load 23.

It should be noted that "coupling" described in this application indicates direct or indirect connection. For example, that A is coupled to B may be that A is directly connected to B, or may be that A is indirectly connected to B by using one or more other electrical components, for example, A is directly connected to C and C is directly connected to B, to implement connection between A and B by using C.

The power supply 22 may be, for example, a power battery (such as a Ni-Cd battery, a NiMH battery, a Li-ion battery, or a Li-polymer battery), a storage battery, or a photovoltaic panel. Optionally, the power supply 22 may be configured to be coupled to a previous-stage circuit, such as an AC/DC converter (Alternating Current/Direct-Current converter) or another DC/DC converter (such as a BUCK converter, a BOOST converter, or a BUCK-BOOST converter). In other words, the power supply 22 may be a direct power supply, or may be an indirect power supply that performs transmission via a circuit.

The load 23 may be, for example, a photovoltaic inverter, an electric vehicle, another DC/DC converter, or a DC/AC converter (Direct-Current/Alternating Current converter).

In this embodiment of this application, the control circuit 21 uses a different circuit structure, so that the circuit breaker 20 can be quickly controlled to be closed or open. In addition, a magnitude of a first current in the control circuit 21 may be changed, to change an acting speed at which the control circuit 21 drives the movable contact of the circuit breaker 20, so that a closing speed or an opening speed of the circuit breaker 20 is changeable. Therefore, when the circuit breaker 20 does not need to be quickly closed or quickly open, the control circuit 21 can reduce a closing speed or an opening speed of the circuit breaker 20, to reduce wear between the movable contact and the static contact of the circuit breaker 20, thereby improving a service life of the circuit breaker 20.

The following describes, with reference to the accompanying drawings, a specific structure of a control circuit used for a circuit breaker.

FIG. 3 is a block diagram of a structure of a control circuit used for a circuit breaker according to an embodiment of this application. As shown in FIG. 3, the control circuit includes a first coil *L*₃₁, a second coil *L*₃₂, a switch module 311, and an adjustable current supply module 312. The switch module 311 includes a first end ①, a second end ②, a third end ③, and a fourth end ④.

The first end ① of the switch module 311 is coupled to one end of the first coil *L*₃₁, the other end of the first coil *L*₃₁ is coupled to one end of the adjustable current supply module 312, the other end of the adjustable current supply module 312 is coupled to the second end ② of the switch module 311, the third end ③ of the switch module 311 is coupled to one end of the second coil *L*₃₂, and the other end of the second coil *L*₃₂ is coupled to the fourth end ④ of the switch module 311.

The switch module 311 includes a plurality of switches. The switch module 311 may specifically control closing or opening of the plurality of switches, to control a direction of a current (a first current) flowing through the first coil *L*₃₁ and the second coil *L*₃₂. It may be understood that, when the first current flows through the first coil *L*₃₁ and the second coil *L*₃₂, the first coil *L*₃₁ generates magnetism by using electricity when a current of the first coil changes, to generate a first magnetic field. Similarly, the second coil *L*₃₂ also generates magnetism by using electricity when a current of the second coil changes, to generate a second magnetic field. A direction of the first magnetic field and a direction of the second magnetic field are correlated with a direction of the first current, and the direction of the first magnetic field and the direction of the second magnetic field determine whether the circuit breaker is closed or open. In a specific implementation, a third magnetic field is generated after the first magnetic field interacts with the second magnetic field, and the third magnetic field acts on the first coil and the second coil. If the third magnetic field enables an interactive force between the first coil and the second coil to be represented as an attractive force, the circuit breaker is closed; or if the third magnetic field enables an interactive force between the first coil and the second coil to be represented as a repulsive force, the circuit breaker is open.

The adjustable current supply module 312 can change a magnitude of the first current. The magnitude of the first current is positively correlated with strength of the first magnetic field and strength of the second magnetic field, and therefore strength of the third magnetic field generated after the first magnetic field interacts with the second magnetic field is also positively correlated with the magnitude of the first current. The third magnetic field separately acts on the first coil *L*₃₁ and the second coil *L*₃₂, and the strength of the third magnetic field is positively correlated with a magnitude of the interactive force between the first coil *L*₃₁ and the second coil *L*₃₂. In addition, the magnitude of the interactive force between the first coil *L*₃₁ and the second coil *L*₃₂ is positively correlated with a closing speed or an opening speed of the circuit breaker.

In other words, when the adjustable current supply module 312 increases the first current, the strength of the first magnetic field and the strength of the second magnetic field increase, and therefore the strength of the third magnetic field generated after the first magnetic field interacts with the second magnetic field increases, so that the interactive force between the first coil *L*₃₁ and the second coil *L*₃₂ increases, and the closing or opening speed of the circuit breaker increases. Alternatively, when the adjustable current supply module 312 reduces the first current, the strength of the first magnetic field and the strength of the second magnetic field decrease, and therefore the strength of the third magnetic field generated after the first magnetic field interacts with the second magnetic field decreases, so that the interactive force between the first coil *L*₃₁ and the second coil *L*₃₂ decreases, and the closing or opening speed of the circuit breaker decreases.

The control circuit in this embodiment of this application can control the circuit breaker to implement quick opening or quick closing at a microsecond µs level. In addition, the adjustable current supply module is added to the control circuit, and the adjustable current supply module can control the magnitude of the first current, to control the closing speed or the opening speed of the circuit breaker. That is, the control circuit in this embodiment of this application is used, so that the closing speed or the opening speed of the circuit breaker is controllable. Therefore, when the opening speed or the closing speed of the circuit breaker needs to be increased, the control circuit can increase the first current. However, when the opening speed or the closing speed of the circuit breaker needs to be reduced, the control circuit can reduce the first current. Therefore, the circuit breaker is prevented from being always quickly open or quickly closed to cause unnecessary wear between a movable contact and a static contact, thereby improving a service life of the circuit breaker.

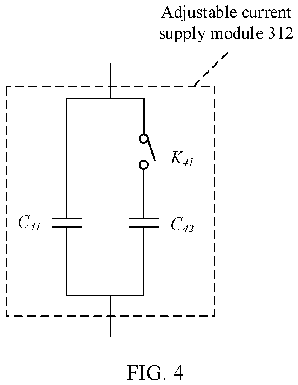

In some feasible implementations, FIG. 4 is a circuit diagram of an adjustable current supply module according to an embodiment of this application. As shown in FIG. 4, the adjustable current supply module 312 may include a first discharge capacitor *C*₄₁, a second discharge capacitor *C*₄₂, and a first switch *K*₄₁. The second discharge capacitor *C*₄₂ is coupled to the first switch *K*₄₁.

In a specific implementation, one end obtained after the second discharge capacitor *C*₄₂ is coupled to the first switch *K*₄₁ in series is coupled to one end of the first discharge capacitor *C*₄₁ and the other end of the first coil *L*₃₁, and the other end obtained after the second discharge capacitor *C*₄₂ is coupled to the first switch *K*₄₁ in series is coupled to the other end of the first discharge capacitor C₄₁ and the second end ② of the switch module 311. In this case, when the first switch *K*₄₁ is closed, the first current is a sum of discharge currents of the first discharge capacitor *C*₄₁ and the second discharge capacitor *C*₄₂; or when the first switch *K*₄₁ is open, the first current is a discharge current of the first discharge capacitor *C*₄₁. In other words, when the first switch *K*₄₁ is closed, the first current can be increased, to increase the strength of the first magnetic field and the strength of the second magnetic field, and increase the strength of the third magnetic field generated after the first magnetic field interacts with the second magnetic field, thereby increasing the interactive force between the first coil *L*₃₁ and the second coil *L*₃₂, and increasing the closing speed or the opening speed of the circuit breaker. When the first switch *K*₄₁ is open, the first current can be reduced, to reduce the strength of the first magnetic field and the strength of the second magnetic field, and reduce the strength of the third magnetic field generated after the first magnetic field interacts with the second magnetic field, thereby reducing the interactive force between the first coil *L*₃₁ and the second coil *L*₃₂, and reducing the closing speed or the opening speed of the circuit breaker.

For example, a processor may identify a closing action or an opening action of the circuit breaker. When identifying that the circuit breaker is open, the processor controls the first switch *K*₄₁ to be closed. In this case, quick opening of the circuit breaker can be implemented. When identifying that the circuit breaker is closed, the processor does not control the first switch *K*₄₁ to act (a default state is being open). In this case, the circuit breaker is closed at a relatively slow speed. It should be noted that the processor may exist independently of the control circuit provided in this application. The processor may be specifically implemented as a central processing unit (central processing unit, CPU), another general purpose processor, a digital signal processor (digital signal processor, DSP), an application-specific integrated circuit (application specific integrated circuit, ASIC), a field-programmable gate array (field-programmable gate array, FPGA), another programmable logic device, a discrete gate, a transistor logic device, a discrete hardware component, or the like.

In this embodiment of this application, actions of the circuit breaker are differentiated, so that the movable contact and the static contact of the circuit breaker can be quickly separated from each other (the opening speed of the circuit breaker can be increased), and the movable contact and the static contact of the circuit breaker can be controlled to be in contact with each other at a normal speed (the closing speed of the circuit breaker can be reduced). Therefore, the circuit breaker can be prevented from being able to be open and closed at only one speed to cause unnecessary wear between the movable contact and the static contact, thereby achieving good safety and high reliability.

Optionally, the processor may monitor a system in which the circuit breaker is located. For example, the circuit breaker is disposed between a power supply and a load, and the processor can monitor a branch current of a branch at which the circuit breaker is located. If the processor detects that the branch current is greater than a safe current, the processor determines that the system in which the circuit breaker is located is faulty, and controls the first switch *K*₄₁ to be closed. In this case, quick opening of the circuit breaker can be implemented. Alternatively, the system in which the circuit breaker is located may have another system monitoring apparatus for monitoring the system in which the circuit breaker is located. When monitoring a system fault, the system monitoring apparatus sends a fault prompt. In this case, the processor controls the first switch *K*₄₁ to be closed. It may be understood that fault detection of the system in which the circuit breaker is located is not limited in this embodiment of this application. In this embodiment of this application, the system in which the circuit breaker is located is monitored mainly in a scenario in which the opening speed of the circuit breaker needs to be increased when a system fault occurs, and the closing speed of the circuit breaker can be reduced when the system in which the circuit breaker is located is not faulty, so that a service life of the circuit breaker can be improved on a basis of ensuring system security.

It should be noted that the first discharge capacitor *C*₄₁ and the second discharge capacitor *C*₄₂ may include a plurality of discharge capacitors connected in series or in parallel; or another discharge capacitor and another switch may be further connected to the two ends of the first discharge capacitor *C*₄₁. A quantity of discharge capacitors is not limited in this embodiment of this application.

Optionally, in some feasible implementations, the adjustable current supply module 312 may be, for example, an adjustable current source (not shown in the figure).

The following provides, with reference to the accompanying drawings, example descriptions of a manner in which the switch module 311 changes a direction of a first current and a manner in which the adjustable current supply module 312 changes a magnitude of the first current.

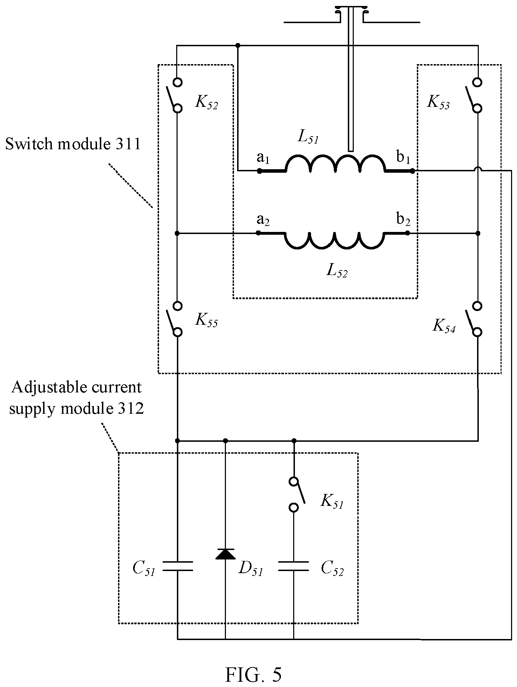

FIG. 5 is a circuit diagram of a control circuit used for a circuit breaker according to an embodiment of this application. As shown in FIG. 5, the switch module 311 includes a second switch *K*₅₂, a third switch *K*₅₃, a fourth switch *K*₅₄, and a fifth switch *K*₅₅, and the adjustable current supply module 312 includes a first discharge capacitor *C*₅₁, a second discharge capacitor *C*₅₂, and a first switch *K*₅₁.

One end of the second switch *K*₅₂ and one end of the third switch *K*₅₃ form a first end ① of the switch module 311 (one end of the second switch *K*₅₂ and one end of the third switch *K*₅₃ are coupled to one end *a*₁ of a first coil *L*₅₁), the other end of the third switch *K*₅₃ and one end of the fourth switch *K*₅₄ form a third end ③ of the switch module 311 (the other end of the third switch *K*₅₃ and one end of the fourth switch *K*₅₄ are coupled to one end *b*₂ of a second coil *L*₅₂), the other end of the second switch *b*₂ and one end of the fifth switch *K*₅₅ form a fourth end ④ of the switch module 311 (the other end of the second switch *K*₅₂ and one end of the fifth switch *K*₅₅ are coupled to the other end *a*₂ of the second coil *L*₅₂), and the other end of the fourth switch *K*₅₄ and the other end of the fifth switch *K*₅₅ form a second end ② of the switch module 311 (the other end of the fourth switch *K*₅₄ and the other end of the fifth switch *K*₅₅ are coupled to the other end of the adjustable current supply module 312). For example, one end of the first discharge capacitor *C*₅₁ and one end of the second discharge capacitor *C*₅₂ are coupled to the other end *b*₁ of the first coil *L*₅₁, the other end of the second discharge capacitor *C*₅₂ is coupled to one end of the first switch *K*₅₁, and the other end of the first switch *K*₅₁ and the other end of the first discharge capacitor *C*₅₁ are coupled to the other end of the fourth switch *K*₅₄ and the other end of the fifth switch *K*₅₅.

Further, the adjustable current supply module 312 may further include a first diode *D*₅₁. and the first diode *D*₅₁ is connected to the two ends of the first discharge capacitor *C*₅₁. The second diode *D*₅₁, can increase a discharge speed of the first discharge capacitor *C*₅₁.

In some feasible implementations, the first switch *K*₅₁ and a target switch group in the switch module 311 are simultaneously closed, and switches in the switch module 311 other than the target switch group are in an open state.

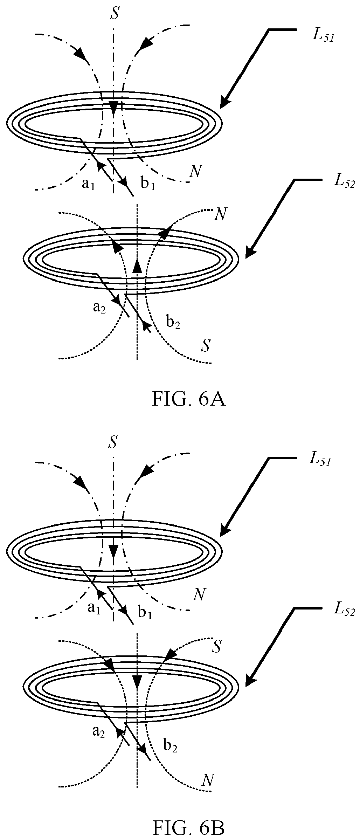

For example, the target switch group includes the second switch *K*₅₂ and the fourth switch *K*₅₄. That is, the first switch *K*₅₁, the second switch *K*₅₂, and the fourth switch *K*₅₄ are simultaneously closed, and the third switch *K*₅₃ and the fifth switch *K*₅₅ are in an open state. In this case, a first current (a sum of discharge currents of the first discharge capacitor *C*₅₁ and the second discharge capacitor *C*₅₂) sequentially passes through the fourth switch *K*₅₄, one end *b*₂ of the second coil *L*₅₂, the other end *a*₂ of the second coil *L*₅₂, the second switch *K*₅₂, one end *a*₁ of the first coil *L*₅₁, and the other end *b*₁ of the first coil *L*₅₁, to form a closed loop. In this case, a schematic diagram of current directions of the first coil *L*₅₁ and the second coil *L*₅₂ may be shown in FIG. 6A. The first current flows into one end *b*₂ of the second coil *L*₅₂ and flows out of the other end *a*₂ of the second coil *L*₅₂, and a current direction of the second coil *L*₅₂ is an anticlockwise direction. According to the right-hand screw rule, a direction of a second magnetic field generated by the second coil *L*₅₂ is an N-pole direction of the second coil *L*₅₂. Similarly, the first current flows into one end *a*₁ of the first coil *L*₅₁ and flows out of the other end *b*₁ of the first coil *L*₅₁, and a current direction of the first coil *L*₅₁ is a clockwise direction. According to the right-hand screw rule, a direction of a first magnetic field generated by the first coil *L*₅₁ is an N-pole direction of the first coil *L*₅₁. In other words, the direction of the first magnetic field is different from the direction of the second magnetic field. In this case, the first magnetic field and the second magnetic field cancel out each other to form a third magnetic field. An N pole of the first coil *L*₅₁ repels an N pole of the second coil *L*₅₂, and the first coil *L*₅₁ moves in a direction away from the second coil *L*₅₂, to drive the movable contact and the static contact of the circuit breaker to be separated from each other (the circuit breaker is open). In this case, because the first switch *K*₅₁ is closed, the first current is a sum of discharge currents of the first discharge capacitor *C*₅₁ and the second discharge capacitor *C*₅₂, and the strength of the first magnetic field and the strength of the second magnetic field are respectively greater than strength of a first magnetic field and strength of a second magnetic field in a case in which the first switch *K*₅₁ is open. In this case, an opening speed of the circuit breaker increases.

Further, in some feasible implementations, the first switch *K*₅₁ and a target switch group in the switch module 311 are simultaneously closed, and switches in the switch module 311 other than the target switch group are in an open state.

For example, the target switch group includes the third switch *K*₅₃ and the fifth switch *K*₅₅. That is, the first switch *K*₅₁, the third switch *K*₅₃, and the fifth switch *K*₅₅ are simultaneously closed, and the second switch *K*₅₂ and the fourth switch *K*₅₄ are in an open state. In this case, a first current (a sum of discharge currents of the first discharge capacitor *C*₅₁ and the second discharge capacitor *C*₅₂) sequentially passes through the fifth switch *K*₅₅, the other end *a*₂ of the second coil *L*₅₂, one end *b*₂ of the second coil *L*₅₂, the third switch *K*₅₃, one end *a*₁ of the first coil *L*₅₁, and the other end *b*₁ of the first coil *L*₅₁, to form a closed loop. In this case, a schematic diagram of current directions of the first coil *L*₅₁ and the second coil *L*₅₂ may be shown in FIG. 6B. The first current flows into the other end *a*₂ of the second coil *L*₅₂ and flows out of one end *b*₂ of the second coil *L*₅₂, and a current direction of the second coil *L*₅₂ is a clockwise direction. According to the right-hand screw rule, a direction of a second magnetic field generated by the second coil *L*₅₂ is an N-pole direction of the second coil *L*₅₂. Similarly, the first current flows into one end *a*₁ of the first coil *L*₅₁ and flows out of the other end *b*₁ of the first coil *L*₅₁, and a current direction of the first coil *L*₅₁ is a clockwise direction. According to the right-hand screw rule, a direction of a first magnetic field generated by the first coil *L*₅₁ is an N-pole direction of the first coil *L*₅₁. In other words, the direction of the first magnetic field is the same as the direction of the second magnetic field. In this case, the first magnetic field and the second magnetic field are superimposed on each other to form a third magnetic field. An N pole of the first coil *L*₅₁ attracts an S pole of the second coil *L*₅₂, and the first coil *L*₅₁ moves in a direction close to the second coil *L*₅₂, to drive the movable contact and the static contact of the circuit breaker to be in contact with each other (the circuit breaker is closed). In this case, because the first switch *K*₅₁ is closed, the first current is a sum of discharge currents of the first discharge capacitor *C*₅₁ and the second discharge capacitor *C*₅₂, and strength of the first magnetic field and strength of the second magnetic field are greater than strength of a first magnetic field and strength of a second magnetic field in a case in which the first switch *K*₅₁ is open. In this case, a closing speed of the circuit breaker increases.

FIG. 6A and FIG. 6B should be understood as only example descriptions of the current directions of the first coil *L*₅₁ and the second coil *L*₅₂, but should not be understood as a limitation. In general, the first coil *L*₅₁ and the second coil *L*₅₂ may respectively generate magnetic fields under the action of the first current, and a specific target switch group may be determined based on a winding manner and a specific connection manner of the first coil *L*₅₁ and the second coil *L*₅₂. Examples are not listed herein.

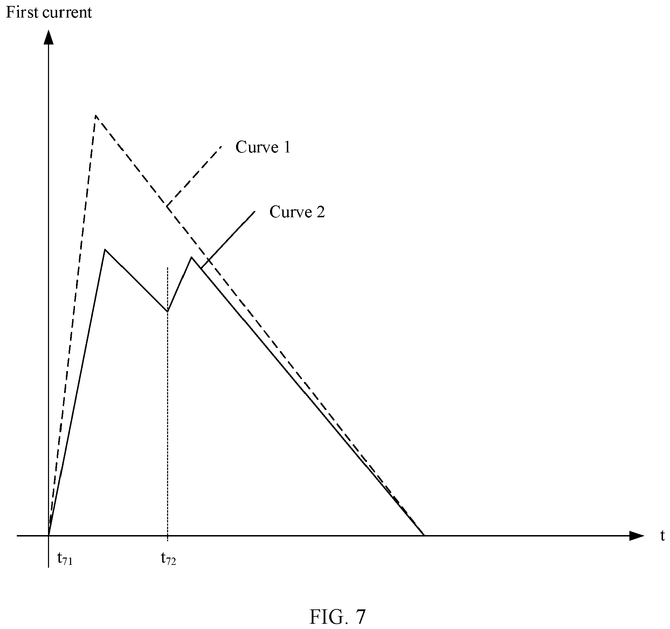

In some feasible implementations, FIG. 7 is a schematic diagram of a first current according to an embodiment of this application. As shown in FIG. 7, when the first switch *K*₅₁ and a target switch group in the switch module 311 are simultaneously closed, a current change of the first current is shown as a curve 1 shown in FIG. 7.

For example, the target switch group in the switch module 311 is closed before the first switch *K*₅₁ is closed. For example, the second switch *K*₅₂ and the fourth switch *K*₅₄ are closed at first time *t*₇₁, the first switch *K*₅₁ is closed at second time *t*₇₂, and the third switch *K*₅₃ and the fifth switch *K*₅₅ are in an open state; or the third switch *K*₅₃ and the fifth switch *K*₅₅ are closed at first time *t*₇₁, the first switch *K*₅₁ is closed at second time *t*₇₂, and the second switch *K*₅₂ and the fourth switch *K*₅₄ are in an open state. For example, an interval between the first time *t*₇₁ and the second time *t*₇₂ is 20 µs.

In this case, a current change of the first current is shown as a curve 2 shown in FIG. 7. That is, before the second time *t*₇₂, the first current is provided by the first discharge capacitor *C*₅₁, and after the second time *t*₇₂, the first current is provided by both the first discharge capacitor *C*₅₁ and the second discharge capacitor *C*₅₂. It can be learned from FIG. 7 that, although a current amplitude of the curve 1 is very large, current use efficiency of the curve 1 is low, that is, use efficiency of the first current is low when the first switch and the target switch group are simultaneously closed. This embodiment of this application is implemented, so that use efficiency of the first current can be improved.

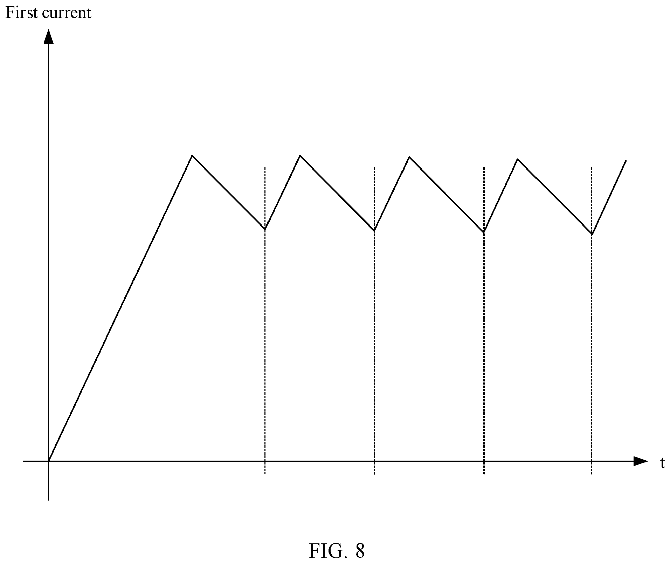

Further, in some feasible implementations, if another discharge branch is further connected to the two ends of the first discharge capacitor *C*₅₁, and the discharge branch also includes a discharge capacitor and a switch, a control method in which switches in discharge branches are closed at different time may be used, to obtain a schematic diagram of a current change of the first current in FIG. 8.

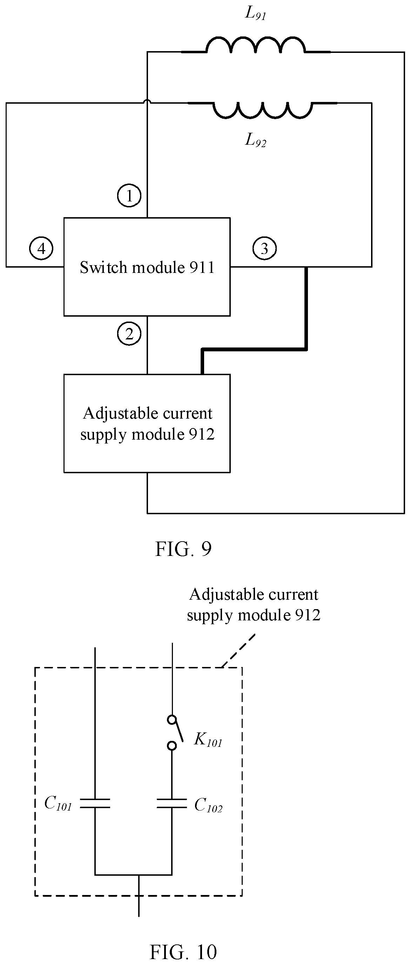

In some feasible implementations, FIG. 9 is a block diagram of another structure of a control circuit used for a circuit breaker according to an embodiment of this application. As shown in FIG. 9, the control circuit includes a first coil *L*₉₁, a second coil *L*₉₂, a switch module 911, and an adjustable current supply module 912. The switch module 911 includes a first end ①, a second end ②, a third end ③, and a fourth end ④.

The first end ① of the switch module 911 is coupled to one end of the first coil *L*₉₁, the other end of the first coil *L*₉₁ is coupled to a first end of the adjustable current supply module 912, a second end of the adjustable current supply module 912 is coupled to the second end ② of the switch module 911, the third end ③ of the switch module 911 is coupled to one end of the second coil *L*₉₂ and a third end of the adjustable current supply module 912, and the other end of the second coil *L*₉₂ is coupled to the fourth end ④ of the switch module 911.

A difference between this embodiment of this application and the foregoing embodiment described with reference to FIG. 3 lies in a connection relationship of the adjustable current supply module 912. In a specific implementation, the adjustable current supply module 912 has three ends. Compared with the adjustable current supply module 312 shown in FIG. 3, the adjustable current supply module 912 provided in this embodiment of this application is further coupled to the third end ③ of the switch module 911 and one end of the second coil *L*₉₂. The adjustable current supply module 912 can still change a magnitude of a first current. The magnitude of the first current is positively correlated with strength of a first magnetic field and strength of a second magnetic field, and therefore strength of a third magnetic field generated after the first magnetic field interacts with the second magnetic field is also positively correlated with the magnitude of the first current. The third magnetic field separately acts on the first coil *L*₉₁ and the second coil *L*₉₂, and the strength of the third magnetic field is positively correlated with a magnitude of an interactive force between the first coil *L*₉₁ and the second coil *L*₉₂. In addition, the magnitude of the interactive force between the first coil *L*₉₁ and the second coil *L*₉₂ is positively correlated with a closing speed or an opening speed of the circuit breaker.

For the switch module 911, refer to the foregoing switch module 311 described with reference to FIG. 3. Details are not described herein again.

In this embodiment of this application, costs of the control circuit can be reduced by changing a connection relationship of the adjustable current supply module.

In some feasible implementations, FIG. 10 is a circuit diagram of an adjustable current supply module according to an embodiment of this application. As shown in FIG. 10, the adjustable current supply module 912 may include a first discharge capacitor *C*₁₀₁, a second discharge capacitor *C*₁₀₂, and a first switch *K*₁₀₁. The second discharge capacitor *C*₁₀₂ is coupled to the first switch *K*₁₀₁.

In a specific implementation, one end obtained after the second discharge capacitor *C*₁₀₂ is coupled to the first switch *K*₁₀₁ in series is coupled to one end of the first discharge capacitor *C*₁₀₁ and the other end *b*₁ of the first coil *L*₁₀₁, the other end of the first discharge capacitor *C*₁₀₁ is coupled to the second end ② of the switch module 911, and the other end obtained after the second discharge capacitor *C*₁₀₂ is coupled to the first switch *K*₁₀₁ in series is coupled to the third end ③ of the switch module 911 and one end *b*₂ of the second coil *L*₁₀₂. In this case, when the first switch *K*₁₀₁ is closed, the first current is a sum of discharge currents of the first discharge capacitor *C*₁₀₁ and the second discharge capacitor *C*₁₀₂; or when the first switch *K*₁₀₁ is open, the first current is a discharge current of the first discharge capacitor *C*₁₀₁. In other words, when the first switch *K*₁₀₁ is closed, the first current can be increased, to increase the strength of the first magnetic field and the strength of the second magnetic field, and increase the strength of the third magnetic field generated after the first magnetic field interacts with the second magnetic field, thereby increasing the interactive force between the first coil *L*₉₁ and the second coil *L*₉₂, and increasing the closing speed or the opening speed of the circuit breaker. When the first switch *K*₁₀₁ is open, the first current can be reduced, to reduce the strength of the first magnetic field and the strength of the second magnetic field, and reduce the strength of the third magnetic field generated after the first magnetic field interacts with the second magnetic field, thereby reducing the interactive force between the first coil *L*₉₁ and the second coil *L*₉₂, and reducing the closing speed or the opening speed of the circuit breaker.

For example, a processor may identify a closing action or an opening action of the circuit breaker. When identifying that the circuit breaker is open, the processor closes the first switch *K*₁₀₁. In this case, an opening speed of the circuit breaker can be increased, and a closing speed of the circuit breaker can be reduced.

Optionally, the processor may monitor a system in which the circuit breaker is located. For example, the circuit breaker is disposed between a power supply and a load, and the processor can monitor a branch current of a branch at which the circuit breaker is located. If the processor detects that the branch current is greater than a safe current, the processor determines that the system in which the circuit breaker is located is faulty, and closes the first switch *K*₁₀₁. In this case, quick opening of the circuit breaker can be implemented. Alternatively, the system in which the circuit breaker is located may have another system monitoring apparatus for monitoring the system in which the circuit breaker is located. When monitoring a system fault, the system monitoring apparatus sends a fault prompt. In this case, the first switch *K*₁₀₁ is closed.

It should be noted that the first discharge capacitor *C*₁₀₁ and the second discharge capacitor *C*₁₀₂ may include a plurality of discharge capacitors connected in series or in parallel; or another discharge capacitor and another switch may be further connected to the two ends of the first discharge capacitor *C*₁₀₁. A quantity of discharge capacitors is not limited in this embodiment of this application.

Optionally, in some feasible implementations, the adjustable current supply module 912 may be, for example, an adjustable current source (not shown in the figure).

The following provides, with reference to the accompanying drawings, example descriptions of a manner in which the switch module 911 changes a direction of a first current and a manner in which the adjustable current supply module 912 changes a magnitude of the first current.

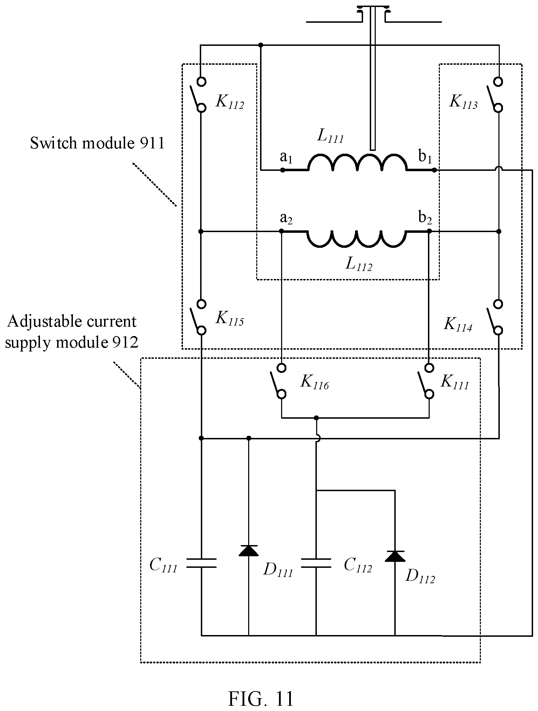

FIG. 11 is another circuit diagram of a control circuit used for a circuit breaker according to an embodiment of this application. As shown in FIG. 11, the switch module 911 includes a second switch *K*₁₁₂, a third switch *K*₁₁₃, a fourth switch *K*₁₁₄, and a fifth switch *K*₁₁₅, and the adjustable current supply module 912 includes a first discharge capacitor *C*₁₁₁, a second discharge capacitor *C*₁₁₂, and a first switch *K*₁₁₁.

One end of the second switch *K*₁₁₂ and one end of the third switch *K*₁₁₃ form a first end ① of the switch module 911 (one end of the second switch *K*₁₁₂ and one end of the third switch *K*₁₁₃ are coupled to one end *a*₁ of a first coil *L*₁₁₁), the other end of the third switch *K*₁₁₃ and one end of the fourth switch *K*₁₁₄ form a third end ③ of the switch module 911 (the other end of the third switch *K*₁₁₃, one end of the fourth switch *K*₁₁₄, and one end of the first switch *K*₁₁₁ are coupled to one end *b*₂ of a second coil *L*₁₁₂), the other end of the second switch *K*₁₁₂ and one end of the fifth switch *K*₁₁₅ form a fourth end ④ of the switch module 911 (the other end of the second switch *K*₁₁₂ and one end of the fifth switch *K*₁₁₅ are coupled to the other end *a*₂ of the second coil *L*₁₁₂), the other end of the fourth switch *K*₁₁₄ and the other end of the fifth switch *K*₁₁₅ form a second end ② of the switch module 911 (the other end of the fourth switch *K*₁₁₄ and the other end of the fifth switch *K*₁₁₅ are coupled to the other end of the first discharge capacitor *C*₁₁₁), one end of the first discharge capacitor *C*₁₁₁ and one end of the second discharge capacitor *C*₁₁₂ are coupled to the other end *b*₁ of the first coil *L*₁₁₁, and the other end of the second discharge capacitor *C*₁₁₂ is coupled to the other end of the first switch *K*₁₁₁.

Further, the adjustable current supply module 912 may further include a first diode *D*₁₁₁, and the first diode *D*₁₁₁ is connected to the two ends of the first discharge capacitor *C*₁₁₁. The first diode *D*₁₁₁ can increase a discharge speed of the first discharge capacitor *C*₁₁₁.

Optionally, the adjustable current supply module 912 may further include a second diode *D*₁₁₂, and the second diode *D*₁₁₂ is connected to the two ends of the second discharge capacitor *C*₁₁₂. The second diode *D*₁₁₂ can increase a discharge speed of the second discharge capacitor *C*₁₁₂.

In some feasible implementations, the first switch *K*₁₁₁, the second switch *K*₁₁₂, and the fourth switch *K*₁₁₄ are simultaneously closed, and the third switch *K*₁₁₃ and the fifth switch *K*₁₁₅ are in an open state. In this case, after respectively passing through the fourth switch *K*₁₁₄ and the first switch *K*₁₁₁, a discharge current of the first discharge capacitor *C*₁₁₁ and a discharge current of the second discharge capacitor *C*₁₁₂ converge at one end *b*₂ of the second coil *L*₁₁₂, and then sequentially pass through the other end *a*₂ of the second coil *L*₁₁₂, the second switch *K*₁₁₂, one end *a*₁ of the first coil *L*₁₁₁, and the other end *b*₁ of the first coil *L*₁₁₁, to form a closed loop. In this case, a schematic diagram of current directions of the first coil *L*₁₁₁ and the second coil *L*₁₁₂ may be shown in FIG. 6A. For a specific implementation, refer to the foregoing description provided with reference to FIG. 6A. Details are not described herein again. Compared with the foregoing embodiment, described with reference to FIG. 5, in which discharge currents of two discharge capacitors simultaneously pass through a same switch (for example, the fourth switch), in this embodiment of this application, the fourth switch needs to bear only a discharge current of the first discharge capacitor, and the first switch needs to bear only a discharge current of the second discharge capacitor. Therefore, in this embodiment of this application, the fourth switch whose rated current is relatively small may be selected. Because a magnitude of a rated current is positively correlated with costs of a switch, in this embodiment of this application, costs of the control circuit can be reduced by selecting the fourth switch whose rated current is relatively small when use safety is ensured.

Optionally, the second switch *K*₁₁₂ and the fourth switch *K*₁₁₄ are closed at first time, the first switch *K*₁₁₁ is closed at second time, and the first time is earlier than the second time. In addition, the third switch *K*₁₁₃ and the fifth switch *K*₁₁₅ are in an open state. In this case, for a change of the first current, refer to the foregoing embodiments described with reference to FIG. 7 and FIG. 8. Details are not described herein again.

In some feasible implementations, the adjustable current supply module 912 further includes a sixth switch *K*₁₁₆, one end of the sixth switch *K*₁₁₆ is coupled to one end of the second switch *K*₁₁₂ and one end of the fifth switch *K*₁₁₅, and the other end of the sixth switch *K*₁₁₆ is coupled to a series coupling point of the second discharge capacitor *C*₁₁₂ and the first switch *K*₁₁₁.

The third switch *K*₁₁₃, the fifth switch *K*₁₁₅, and the sixth switch *K*₁₁₆ are simultaneously closed, and the first switch *K*₁₁₁, the second switch *K*₁₁₂, and the fourth switch *K*₁₁₄ are in an open state. In this case, after respectively passing through the fifth switch *K*₁₁₅ and the sixth switch *K*₁₁₆, a discharge current of the first discharge capacitor *C*₁₁₁ and a discharge current of the second discharge capacitor *C*₁₁₂ converge at the other end *a*₂ of the second coil *L*₁₁₂, and then sequentially pass through one end *b*₂ of the second coil *L*₁₁₂, the third switch *K*₁₁₃, one end *a*₁ of the first coil *L*₁₁₁, and the other end *b*₁ of the first coil *L*₁₁₁, to form a closed loop. In this case, a schematic diagram of current directions of the first coil *L*₁₁₁ and the second coil *L*₁₁₂ may be shown in FIG. 6B. For a specific implementation, refer to the foregoing description provided with reference to FIG. 6B. Details are not described herein again. Similarly, in this embodiment of this application, the fifth switch needs to bear only a discharge current of the first discharge capacitor, and the sixth switch needs to bear only a discharge current of the second discharge capacitor. Therefore, in this embodiment of this application, the fifth switch whose rated current is relatively small may be selected. Because a magnitude of a rated current is positively correlated with costs of a switch, in this embodiment of this application, costs of the control circuit can be reduced by selecting the fifth switch whose rated current is relatively small when use safety is ensured.

Optionally, the third switch *K*₁₁₃ and the fifth switch *K*₁₁₅ are closed at third time, the sixth switch *K*₁₁₆ is closed at fourth time, and the third time is earlier than the fourth time. In addition, the first switch *K*₁₁₁, the second switch *K*₁₁₂, and the fourth switch *K*₁₁₄ are in an open state. In this case, for a change of the first current, refer to the foregoing embodiments described with reference to FIG. 7 and FIG. 8. Details are not described herein again.

For example, the switches in this application each may be specifically implemented as a triode or a metal-oxide-semiconductor field-effect transistor (Metal-Oxide-Semiconductor Field-Effect Transistor, MOSFET).

It should be noted that, the terms "first" and "second" are used for descriptive purposes only, and cannot be construed as indicating or implying relative importance.

The foregoing descriptions are merely specific implementations of this application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

## Claims

1. A control circuit used for a circuit breaker, wherein the control circuit comprises a first coil, a second coil, a switch module, and an adjustable current supply module, the switch module comprises a first end, a second end, a third end, and a fourth end; and the adjustable current supply module comprises a first end and a second end;
the first end of the switch module is coupled to one end of the first coil, the other end of the first coil is coupled to the first end of the adjustable current supply module, the second end of the adjustable current supply module is coupled to the second end of the switch module, the third end of the switch module is coupled to one end of the second coil, and the other end of the second coil is coupled to the fourth end of the switch module;
the switch module is configured to control a direction of a first current, wherein the first current flows through the first coil and the second coil; and
the adjustable current supply module is configured to change a magnitude of the first current, wherein the first current is used to excite the first coil to generate a first magnetic field and excite the second coil to generate a second magnetic field, and the first magnetic field interacts with the second magnetic field, to control closing or opening of the circuit breaker.

2. The control circuit according to claim 1, wherein the adjustable current supply module further comprises a third end;
the third end of the switch module is coupled to one end of the second coil and the third end of the adjustable current supply module.

3. The control circuit according to claim 1 or 2, wherein when the magnitude of the first current changes, both strength of the first magnetic field and strength of the second magnetic field accordingly change, correspondingly, strength of a third magnetic field generated after the first magnetic field interacts with the second magnetic field also changes, the third magnetic field separately acts on the first coil and the second coil, an interactive force between the first coil and the second coil also changes, and the change of the interactive force affects a closing or opening speed of the circuit breaker.

4. The control circuit according to claim 3, wherein when the first current increases, both the strength of the first magnetic field and the strength of the second magnetic field increase, the strength of the third magnetic field generated after the first magnetic field interacts with the second magnetic field also increases, and the interactive force between the first coil and the second coil also increases, so that the closing or opening speed that is of the circuit breaker and that is affected by the interactive force increases.

5. The control circuit according to claim 3, wherein when the first current decreases, both the strength of the first magnetic field and the strength of the second magnetic field decrease, the strength of the third magnetic field generated after the first magnetic field interacts with the second magnetic field also decreases, and the interactive force between the first coil and the second coil also decreases, so that the closing or opening speed that is of the circuit breaker and that is affected by the interactive force decreases.

6. The control circuit according to any one of claims 1, 3 to 5, wherein the adjustable current supply module comprises a first discharge capacitor, a second discharge capacitor, and a first switch, and the second discharge capacitor is coupled to the first switch in series; and
one end obtained after the second discharge capacitor is coupled to the first switch in series is coupled to one end of the first discharge capacitor and the other end of the first coil, and the other end obtained after the second discharge capacitor is coupled to the first switch in series is coupled to the other end of the first discharge capacitor and the second end of the switch module, wherein
when the first switch is closed, the first current is a sum of discharge currents of the first discharge capacitor and the second discharge capacitor; or when the first switch is open, the first current is a discharge current of the first discharge capacitor.

7. The control circuit according to any one of claims 2-5, wherein the adjustable current supply module comprises a first discharge capacitor, a second discharge capacitor, and a first switch, and the second discharge capacitor is coupled to the first switch in series; and
one end obtained after the second discharge capacitor is coupled to the first switch in series is coupled to one end of the first discharge capacitor and the other end of the first coil, the other end of the first discharge capacitor is coupled to the second end of the switch module, and the other end obtained after the second discharge capacitor is coupled to the first switch in series is coupled to the third end of the switch module and one end of the second coil, wherein
when the first switch is closed, the first current is a sum of discharge currents of the first discharge capacitor and the second discharge capacitor; or when the first switch is open, the first current is a discharge current of the first discharge capacitor.

8. The control circuit according to claim 6, wherein the switch module comprises a second switch, a third switch, a fourth switch, and a fifth switch;
one end of the second switch and one end of the third switch form the first end of the switch module, the other end of the second switch and one end of the fifth switch form the fourth end of the switch module, the other end of the third switch and one end of the fourth switch form the third end of the switch module, and the other end of the fourth switch and the other end of the fifth switch form the second end of the switch module; and
the first switch and a target switch group in the switch module are simultaneously closed, or a target switch group in the switch module is closed at first time, the first switch is closed at second time, and the first time is earlier than the second time, wherein switches in the switch module other than the target switch group are in an open state, and the target switch group comprises the second switch and the fourth switch, or the third switch and the fifth switch.

9. The control circuit according to claim 7, wherein the switch module comprises a second switch, a third switch, a fourth switch, and a fifth switch;
one end of the second switch and one end of the third switch form the first end of the switch module, the other end of the second switch and one end of the fifth switch form the fourth end of the switch module, the other end of the third switch and one end of the fourth switch form the third end of the switch module, and the other end of the fourth switch and the other end of the fifth switch form the second end of the switch module; and
the first switch, the second switch, and the fourth switch are simultaneously closed, or the second switch and the fourth switch are closed at first time, the first switch is closed at second time, and the first time is earlier than the second time, wherein the third switch and the fifth switch are in an open state.

10. The control circuit according to any one of claims 6-9, wherein the adjustable current supply module further comprises a first diode, and the first diode is connected to the two ends of the first discharge capacitor in parallel; and
the first diode is configured to increase a discharge speed of the first discharge capacitor.

11. The control circuit according to claim 10, wherein the adjustable current supply module further comprises a second diode, and the second diode is connected to the two ends of the second discharge capacitor in parallel; and
the second diode is configured to increase a discharge speed of the second discharge capacitor.

12. The control circuit according to any one of claims 9 to 11, wherein the adjustable current supply module further comprises a sixth switch, one end of the sixth switch is coupled to the other end of the second switch and one end of the fifth switch, and the other end of the sixth switch is coupled to a series coupling point of the second discharge capacitor and the first switch, wherein
the third switch, the fifth switch, and the sixth switch are simultaneously closed, or the third switch and the fifth switch are closed at third time, the sixth switch is closed at fourth time, and the third time is earlier than the fourth time, wherein the first switch, the second switch, and the fourth switch are in an open state.

13. The control circuit according to any one of claims 6 to 12, wherein the first switch is closed when the circuit breaker is open.

14. The control circuit according to any one of claims 6 to 12, wherein the first switch is closed when a system in which the circuit breaker is located is faulty.

15. An electronic device, wherein the electronic device comprises a circuit breaker and the control circuit used for the circuit breaker according to any one of claims 1 to 14.
